# EUROPEAN PATENT APPLICATION

(11) **EP 3 534 089 A1**
(43) Date of publication of application: **04.09.2019**
(21) Application number: 17866203.7
(22) Date of filing: 22.06.2017
(51) Int. Cl.: F25B 1/00, F25B 41/04, F25B 31/02

(54) **AIR-CONDITIONING SYSTEM**

(30) Priority: 27.10.2016 CN 201610957307
(71) Applicant: Chongqing Midea General Refrigeration Equipment Co., Ltd., Chongqing 401336 (CN)
(72) Inventor: DAI, Qibin, Chongqing 401336 (CN); WAN, Xiang, Chongqing 401336 (CN); LUO, Rongjun, Chongqing 401336 (CN)
(74) Representative: Lam, Alvin
(86) International application number: PCT/CN2017/089641
(87) International publication number: WO 2018/076734

(57) **Abstract**

Provided is an air-conditioning system (100), comprising: a compressor (1), in which a variable frequency motor (11) is arranged; a condenser (2) comprising a first refrigerant flow passage and a first water flow passage; an evaporator comprising a second refrigerant flow passage and a second water flow passage; a first water inlet pipe (3) and a first water outlet pipe (4), which are respectively connected with a water inlet and a water outlet of the first water flow passage; a throttling element interposed in series between a second end of the first refrigerant flow passage and a first end of the second refrigerant flow passage; and a frequency converter (5) which is electrically connected with the variable frequency motor (11) to adjust the rotation speed of the variable frequency motor (11) and supplies power to the variable frequency motor (11).

## Description

### FIELD

The present disclosure relates to a technical field of air conditioners, more particularly to an air-conditioning system.

### BACKGROUND

The water chiller unit is generally a constant frequency unit. With the promotion and requirements of energy saving, the variable frequency water chiller unit has been developed to improve the energy saving performance of products and improve an integrated part load value (IPLV) of the water chiller unit.

Generally, the water chiller unit and the frequency converter of the variable frequency water chiller unit are generally separated from each other, which facilitates independent production and installation of the frequency converter, but a power line needs to be routed separately due to the separation of the frequency converter and the water chiller unit, and a separate machine room is required for the frequency converter, which wastes space and costs a lot.

### SUMMARY

The present disclosure aims to solve at least one of the technical problems existing in the related art to at least some extent. To this end, the present disclosure provides an air-conditioning system that integrates with a frequency converter, which avoids routing the power line separately due to the separation of the frequency converter and the water chiller unit, and does not require a separate machine room for accommodating the frequency converter, thereby avoiding the waste of space and helping to reduce costs.

An air-conditioning system according to embodiments of the present disclosure includes a compressor, a condenser, an evaporator, a first water inlet pipe and a first water outlet pipe, and a throttle member. The compressor has an exhaust port and an air return port, and is provided with a variable frequency motor therein. The condenser includes a first refrigerant flow path and a first water flow path, and a first end of the first refrigerant flow path is connected with the exhaust port. The evaporator includes a second refrigerant flow path and a second water flow path, a first end of the second refrigerant flow path is connected to a second end of the first refrigerant flow path, and a second end of the second refrigerant flow path is connected to the air return port. The first water inlet pipe and the first water outlet pipe are respectively connected to a water inlet and a water outlet of the first water flow path. The throttle member is connected in series between the second end of the first refrigerant flow path and the first end of the second refrigerant flow path. The frequency converter is electrically connected to the variable frequency motor to adjust a rotation speed of the variable frequency motor and supply power to the variable frequency motor.

In the embodiments of the present disclosure, with the air-conditioning system including the frequency converter and electrically connecting the frequency converter with the variable frequency motor so to adjust the rotation speed of the variable frequency motor and supply power to the variable frequency motor, the frequency converter integrates with the air-conditioning system, which avoids routing the power line separately due to the separation of the frequency converter and the water chiller unit, and does not require the separate machine room for accommodating the frequency converter, thereby avoiding the waste of space and helping to reduce costs, and meanwhile the increase of IPLV or NPLV of the unit is facilitated and the purpose of saving energy is achieved.

According to some embodiments of the present disclosure, the frequency converter is fixed to the condenser or the evaporator.

According to some embodiments of the present disclosure, the air-conditioning system further includes a cooling flow path for cooling the frequency converter, and the frequency converter includes a cooling passage for dissipating heat from a heating member, and the cooling passage is connected in series in the cooling flow path.

Specifically, an inlet of the cooling flow path is connected to the first water inlet pipe, and an outlet of the cooling flow path is connected to the first water outlet pipe.

Specifically, a water return valve is connected in series in the cooling flow path and is located between the frequency converter and the first water outlet pipe.

Specifically, a filter is connected in series in the cooling flow path, and the filter is located between the first water inlet pipe and the frequency converter.

Specifically, the inlet of the cooling flow path is connected between the condenser and the throttle member, and the outlet of the cooling flow path is connected between the throttle member and the evaporator.

According to some embodiments of the present disclosure, the throttle member is an electronic expansion valve, a capillary tube or a thermal expansion valve.

According to some embodiments of the present disclosure, the evaporator is a dry evaporator, a flooded evaporator or a falling-film evaporator.

According to some embodiments of the present disclosure, the air-conditioning system is a water chiller unit or a heat pump unit.

### BRIEF DESCRIPTION OF THE DRAWINGS

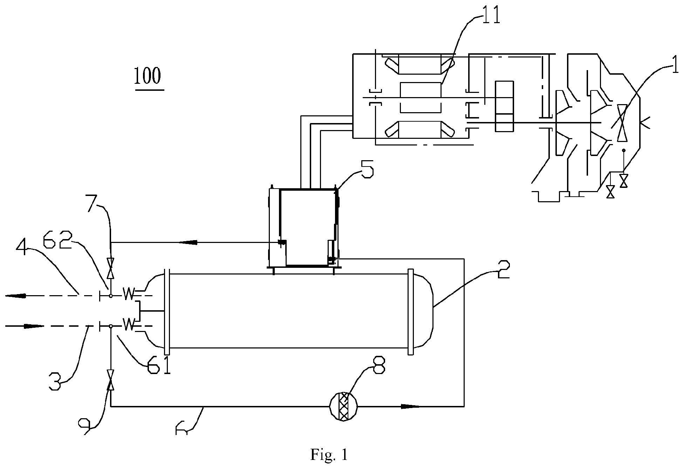

Fig. 1 is a partial structural schematic view of an air-conditioning system according to some embodiments of the present disclosure.

### Reference numerals:

air-conditioning system 100;
compressor 1; variable frequency motor 11; condenser 2; first water inlet pipe 3; first outlet water pipe 4; frequency converter 5; cooling flow path 6; inlet 61; outlet 62; water return valve 7; filter 8; water inlet valve 9.

### DETAILED DESCRIPTION

Embodiments of the present disclosure will be described in detail and examples of embodiments are illustrated in the drawings. Embodiments described herein with reference to drawings are explanatory, serve to explain the present disclosure, and are not construed to limit the present disclosure.

Terms such as "first" and "second" are used herein for purposes of description and are not intended to indicate or imply relative importance or significance or to imply the number of indicated technical features. Thus, the features defined with "first" and "second" may comprise at least one of the features either explicitly or implicitly. In the description of the present disclosure, the meaning of "a plurality of' is at least two, such as two, three, etc., unless specifically defined otherwise.

In the description of the present disclosure, unless specified or limited otherwise, the terms "mounted", "connected", "coupled", "fixed" and the like are used broadly, and may be, for example, fixed connections, detachable connections, or integral connections; may also be mechanical or electrical connections or communicable to each other; may also be direct connections or indirect connections via intervening structures; may also be inner communications of two elements or interaction relationship of two elements, which may be understood by those skilled in the art according to specific situations.

In the present disclosure, unless specified or limited otherwise, the first feature is "on" or "under" the second feature refers to that the first feature and the second feature are in direct contact or in indirect contact through intermediary. And, the first feature is "on", "above", "over" the second feature may refer to that the first feature is right over the second feature or is diagonally above the second feature, or just refer to the horizontal height of the first feature is higher than the horizontal height of the second feature. The first feature is "below" or "under" the second feature may refer to the first feature is right below the second feature or is diagonally below the second feature, or just refer to the horizontal height of the first feature is lower than the horizontal height of the second feature.

An air-conditioning system 100 according to an embodiment of the present disclosure will be described below with reference to FIG. 1. The air-conditioning system 100 may be configured to adjust indoor ambient temperature. For example, the air-conditioning system 100 may be a heat pump unit or a water chiller unit.

As shown in FIG. 1, the air-conditioning system 100 according to the embodiment of the present disclosure may include a compressor 1, a condenser 2, an evaporator (not shown), a first water inlet pipe 3, a first water outlet pipe 4, a throttle member (not shown) and a frequency converter 5.

Specifically, the compressor 1 has an exhaust port and an air return port. A refrigerant of high temperature and high pressure may be formed after being compressed in the compressor 1 and be discharged from the exhaust port. The refrigerant may return to the compressor 1 from the air return port after a heat exchange in the flow path of the air-conditioning system 100.

The compressor 1 is provided with a variable frequency motor 11 inside and the variable frequency motor 11 may be configured to drive a crankshaft of the compressor 1 to operate so as to facilitate compression of the refrigerant. It should be noted here that the specific structure and operation principle of the compressor 1 are well known to those skilled in the art and will not be described in detail herein.

The condenser 2 includes a first refrigerant flow path and a first water flow path, and a first end of the first refrigerant flow path is connected to the exhaust port, whereby the high-temperature high-pressure refrigerant discharged from the exhaust port of the compressor 1 may flow to the first refrigerant flow path. The refrigerant in the first refrigerant flow path may exchange heat with water in the first water flow path. The first water inlet pipe 3 and the first water outlet pipe 4 are respectively connected to a water inlet and a water outlet of the first water flow path. Cooling water may flow to the first water flow path through the first water inlet pipe 3 via the water inlet, and the water after the heat exchange may flow out of the water outlet and flows into the first water outlet pipe 4.

The evaporator, such as a dry evaporator, a flooded evaporator or a falling-film evaporator, includes a second refrigerant flow path and a second water flow path. A first end of the second refrigerant flow path and a second end of the first refrigerant flow path are connected, the throttle member is connected in series between the second end of the first refrigerant flow path and the first end of the second refrigerant flow path, and the second end of the second refrigerant flow path is connected to the air return port. Consequently, the high-temperature high-pressure refrigerant discharged from the compressor 1 may firstly flow to the first refrigerant flow path, the refrigerant exchanges heat in the first refrigerant flow path with the water in the first water flow path, and the refrigerant after the heat exchange flows out of the first refrigerant flow path and flows to the throttle member. A low-temperature low-pressure liquid refrigerant is formed after throttling and depressure by the throttle member, and then flows to the second refrigerant flow path, and the refrigerant in the second refrigerant flow path exchanges heat with the water in the second water flow path. After the heat exchange, the refrigerant returns to the compressor 1 via the air return port of the compressor 1.

Specifically, a water inlet and a water outlet of the second water flow path are respectively connected to a second water inlet pipe and a second water outlet pipe, and the cooling water may flow to the second water flow path from the second water inlet pipe via the water inlet. The water after the heat exchange may flow out of the water outlet and to the second water outlet pipe. It should be noted here that the pipe arrangement and connection relationship of the first water inlet pipe 3, the second water inlet pipe, the first water outlet pipe 4 and the second water outlet pipe of the air-conditioning system 100 are well known to those skilled in the art. No further details will be given.

Alternatively, the throttle member is an electronic expansion valve, a capillary tube or a thermal expansion valve, therefore the structure is simple.

The frequency converter 5 is electrically connected to the variable frequency motor 11 to adjust a rotation speed of the variable frequency motor 11 and supply power to the variable frequency motor 11. For example, the frequency converter 5 is connected to an external power source, and the variable frequency motor 11 is electrically connected to the frequency converter 5 through a power line to realize power supply to the variable frequency motor 11 and to adjust the rotation speed of the variable frequency motor 11. Consequently, the frequency of the compression cylinder of the compressor 1 is adjusted, such that the purpose of energy saving of the compressor 1 may be achieved.

Specifically, the frequency converter 5 may be fixed to the condenser 2 or the evaporator, thus the structure is simple, which is convenient to simplify the structure and save installation space.

Specifically, the air-conditioning system 100 further includes a controller, and the controller is able to be connected to the frequency converter 5 so as to control the frequency converter 5 to adjust the rotation speed of the variable frequency motor 11. For example, the controller may control the frequency converter 5 to adjust the rotation speed of the variable frequency motor 11 according to the temperature and/or pressure of the refrigerant discharged from the exhaust port of the compressor 1. Or in other embodiments, the controller may also control the frequency converter 5 to adjust the rotation speed of the variable frequency motor 11 according to the temperature of the second water flow path, which will not be specifically limited in the present disclosure.

According to the air-conditioning system 100 of the embodiment of the present disclosure, with the air-conditioner system 100 including the frequency converter 5 and the frequency converter 5 being electrically connected to the variable frequency motor 11 to adjust the rotation speed of the variable frequency motor 11 and supply power to the variable frequency motor 11, the frequency converter 5 integrated with the air-conditioning system 100, which avoids routing the power line separately due to the separation of the frequency converter 5 and the water chiller unit, and does not require a separate machine room for accommodating the frequency converter 5, so that waste of space is avoided, the cost reduction is facilitated, and meanwhile the IPLV or NPLV (integrated part load value, the part load value in non-standard ARI condition) of the unit is increased, and the purpose of energy saving is achieved.

Preferably, as illustrated in FIG. 1, the frequency converter 5 is fixed to the condenser 2.

In some embodiments of the present disclosure, the air-conditioning system 100 further includes a cooling flow path 6 for cooling the frequency converter 5. The frequency converter 5 includes a cooling passage for dissipating heat from the heating member, and the cooling passage is connected in series in the cooling flow path 6. Therefore, it is beneficial to increase the service life of the frequency converter 5 and to prevent the frequency converter 5 from being burnt out due to high temperature resulting from long-hour working.

Specifically, as shown in FIG. 1, an inlet 61 of the cooling flow path 6 is connected to the first water inlet pipe 3, and an outlet 62 of the cooling flow path 6 is connected to the first water outlet pipe 4. That is, a flow path, i.e., the cooling flow path 6, is bypassed between the first water inlet pipe 3 and the first water outlet pipe 4 to dissipate heat from the heating member of the frequency converter 5. Consequently, the cooling water in the first water inlet pipe 3 is divided into two paths, one to the first water flow path and the other to the cooling flow path 6. The cooling water flowing to the cooling flow path 6 passes through the cooling passage and dissipates heat from the heating member, and then the cooling water flows out of the cooling passage and flows back to the cooling flow path 6 and finally flows to the first water outlet pipe 4. Therefore, it is beneficial to improve the heat dissipation effect, and the frequency converter 5 can be prevented from being frosted or condensed to affect the use of the frequency converter 5. Certainly, the present disclosure is not limited thereto. In other embodiments, the inlet of the cooling flow path 6 is connected to the second water inlet pipe, and the outlet of the cooling flow path 6 is connected to the second water outlet pipe. That is, a flow path, i.e., the cooling flow path 6, is bypassed between the second water inlet pipe and the second water outlet pipe to dissipate heat from the heating member of the frequency converter 5. Consequently, the cooling water in the second water inlet pipe is divided into two paths, one to the second water flow path and the other to the cooling flow path 6. The cooling water flowing to the cooling flow path 6 passes through the cooling passage and dissipates heat from the heating member, and then the cooling water flows out of the cooling passage and flows back to the cooling flow path 6 and finally flows to the second water outlet pipe.

Specifically, a water return valve 7 is connected in series in the cooling flow path 6 and is located between the frequency converter 5 and the first water outlet pipe 4, thereby facilitating adjustment of the amount of returned water flowing to the first water outlet pipe 4 to equalize the pressure of the water flow between the inlet 61 and the outlet 62 in the cooling flow path 6.

Furthermore, a water inlet valve 9 is further connected in series in the cooling flow path 6 and is located between the frequency converter 5 and the first water inlet pipe 3, thereby facilitating adjustment of the amount of water at the inlet 61 to equalize the pressure of the water flow between the inlet 61 and the outlet 62 in the cooling flow path 6.

Furthermore, a filter 8 is connected in series in the cooling flow path 6 and is located between the first water inlet pipe 3 and the frequency converter 5, so as to filter the cooling water flowing therethrough to improve the purity of the water flowing to the cooling passage, which is beneficial to improve the heat exchange effect.

In other embodiments, the inlet 61 of the cooling flow path 6 is connected between the condenser 2 and the throttle member, and the outlet 62 of the cooling flow path 6 is connected between the throttle member and the evaporator. Consequently, the refrigerant may be divided into two paths after flowing out of the condenser 2, one of which flows to the throttle member and the other of which flows to the cooling flow path 6. The refrigerant flowing into the cooling flow path 6 may flow to the cooling passage to dissipate the heating member, and then the refrigerant flows to another portion of the cooling flow path 6 and flows to the evaporator. In such way, it is beneficial to improve the heat dissipation effect.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or features may be combined in any suitable manner in one or more embodiments or examples. In addition, without contradiction, those skilled in the art can combine or unite different embodiments or examples and features in different embodiments or examples described in the specification.

Although embodiments have been shown and described, it would be appreciated by those skilled in the art that the embodiments are only explanatory and cannot be construed to limit the present disclosure, the changes, modifications, alternatives and variations can be made in the embodiments within the scope of the present disclosure.

## Claims

1. An air-conditioning system, comprising:
a compressor having an exhaust port and an air return port, wherein the compressor is provided with a variable frequency motor therein;
a condenser comprising a first refrigerant flow path and a first water flow path, wherein a first end of the first refrigerant flow path is connected to the exhaust port;
an evaporator comprising a second refrigerant flow path and a second water flow path, wherein a first end of the second refrigerant flow path is connected to a second end of the first refrigerant flow path, and a second end of the second refrigerant flow path is connected to the air return port;
a first water inlet pipe and a first water outlet pipe, wherein the first water inlet pipe and the first water outlet pipe are respectively connected to a water inlet and a water outlet of the first water flow path;
a throttle member connected in series between the second end of the first refrigerant flow path and the first end of the second refrigerant flow path; and
a frequency converter electrically connected to the variable frequency motor to adjust a rotation speed of the variable frequency motor and supply power to the variable frequency motor.

2. The air-conditioning system according to claim 1, wherein the frequency converter is fixed to the condenser or the evaporator.

3. The air-conditioning system according to any one of claims 1 to 2, further comprising a cooling flow path for cooling the frequency converter, wherein the frequency converter comprises a cooling passage for dissipating heat from a heating member, and the cooling passage is connected in series in the cooling flow path.

4. The air-conditioning system according to claim 3, wherein an inlet of the cooling flow path is connected to the first water inlet pipe, and an outlet of the cooling flow path is connected to the first water outlet pipe.

5. The air-conditioning system according to claim 4, wherein a water return valve is connected in series in the cooling flow path and is located between the frequency converter and the first water outlet pipe.

6. The air-conditioning system according to claim 4, wherein a filter is connected in series in the cooling flow path, and the filter is located between the first water inlet pipe and the frequency converter.

7. The air-conditioning system according to claim 3, wherein an inlet of the cooling flow path is connected between the condenser and the throttle member, and an outlet of the cooling flow path is connected between the throttle member and the evaporator.

8. The air-conditioning system according to any one of claims 1 to 7, wherein the throttle member is an electronic expansion valve, a capillary tube or a thermal expansion valve.

9. The air-conditioning system according to any one of claims 1-8, wherein the evaporator is a dry evaporator, a flooded evaporator or a falling-film evaporator.

10. The air-conditioning system according to any one of claims 1 to 9, wherein the air-conditioning system is a water chiller unit or a heat pump unit.
